# EUROPÄISCHE PATENTSCHRIFT

(11) **EP 3 690 580 B1**
(45) Veröffentlichungstag und Bekanntmachung des Hinweises auf die Patenterteilung: **26.05.2021**
(21) Anmeldenummer: 19154574.8
(22) Anmeldetag: 30.01.2019
(51) Int. Cl.: G05B 23/02

(54) **GEMEINSAME VISUALISIERUNG VON PROZESSDATEN UND PROZESSALARMEN**
JOINT VISUALIZATION OF PROCESS DATA AND PROCESS ALARMS
VISUALISATION SIMULTANÉE DE DONNÉES DE PROCESSUS ET D'ALARMES

(43) Veröffentlichungstag der Anmeldung: 05.08.2020
(73) Patentinhaber: Siemens Aktiengesellschaft, 80333 München (DE)
(72) Erfinder: LUTZ, Benjamin, 76327 Pfinztal (DE)

(56) Entgegenhaltungen:
- DE-A1-102016 108 197
- JP-A- H11 184 519
- US-A1- 2004 148 130

## Beschreibung

Die vorliegende Erfindung geht aus von einem Visualisierungsverfahren für einem Prozessobjekt zugeordnete Prozessdaten und Prozessalarme,
- wobei eine industrielle technische Anlage von einem Prozessleitsystem gesteuert und überwacht wird,
- wobei dem Prozessleitsystem Prozessobjekte und die Zuordnung der jeweiligen Prozessdaten und der jeweiligen Prozessalarme zu den Prozessobjekten bekannt sind,
- wobei die Prozessalarme jeweils eine Priorität aufweisen,
- wobei das Prozessleitsystem automatisch einen Prozessalarm des jeweiligen Prozessobjekts auslöst, wenn die dem jeweiligen Prozessobjekt zugeordneten Prozessdaten eine vorbestimmte Auslösebedingung erfüllen,
- wobei das Prozessleitsystem beim Auslösen eines Prozessalarms eine entsprechende Alarmmeldung an ein Alarmsystem übermittelt,
- wobei das Alarmsystem den entsprechenden Prozessalarm an mindestens eine Bedienperson ausgibt,
- wobei das Prozessleitsystem zu Erfassungszeitpunkten jeweils die Prozessdaten und die momentan ausgelösten Prozessalarme im Sinne einer Historie archiviert,
- wobei das Alarmsystem aufgrund der Selektion eines Prozessdatums und der Vorgabe eines zugehörigen Darstellungszeitraums durch die mindestens eine Bedienperson vom Prozessleitsystem für den vorgegebenen Darstellungszeitraum die Historie des selektierten Prozessdatums anfordert und den zugehörigen zeitlichen Verlauf als Grafik an die mindestens eine Bedienperson ausgibt,
- wobei die Grafik eine Anzahl von Prozessdatenpunkten umfasst und
- wobei das Alarmsystem die Prozessdatenpunkte anhand der Werte des selektierten Prozessdatums eines für den jeweiligen Prozessdatenpunkt charakteristischen jeweiligen Erfassungszeitraums ermittelt.

Die vorliegende Erfindung geht weiterhin aus von einem Computerprogramm für ein Alarmsystem, wobei das Computerprogramm Maschinencode umfasst, der von dem Alarmsystem abarbeitbar ist, wobei das Alarmsystem aufgrund der Abarbeitung des Maschinencodes
- von einem eine industrielle technische Anlage steuernden und überwachenden Prozessleitsystem Alarmmeldungen über auftretende, eine jeweilige Priorität aufweisende Prozessalarme entgegennimmt und die auftretenden Prozessalarme an mindestens eine Bedienperson ausgibt,
- aufgrund der Selektion eines einem Prozessobjekt des Prozessleitsystems zugeordneten Prozessdatums und der Vorgabe eines zugehörigen Darstellungszeitraums durch die mindestens eine Bedienperson vom Prozessleitsystem für den vorgegebenen Darstellungszeitraum die Historie von von dem Prozessleitsystem zu Erfassungszeitpunkten erfassten und im Sinne einer Historie archivierten Werten des selektierten Prozessdatums anfordert und den zugehörigen zeitlichen Verlauf als eine Anzahl von Prozessdatenpunkten umfassende Grafik an die mindestens eine Bedienperson ausgibt und
- die Prozessdatenpunkte anhand der Werte des selektierten Prozessdatums eines für den jeweiligen Prozessdatenpunkt charakteristischen jeweiligen Erfassungszeitraums ermittelt.

Die vorliegende Erfindung geht weiterhin aus von einem Alarmsystem, wobei das Alarmsystem mit einem derartigen Computerprogramm programmiert ist, so dass das Alarmsystem im Betrieb die vorstehend in Verbindung mit dem Computerprogramm angegebenen Verfahrensschritte ausführt.

Für die Bedienung und Beobachtung von verfahrenstechnischen Anlagen sind sogenannte Prozessobjektansichten von großer Bedeutung. In zugehörigen Anlagenbildern werden für die Prozessobjekte sogenannte Blocksymbole integriert, die neben einem wichtigen Prozesswert auch verschiedene Statusinformationen wie beispielsweise Prozessalarme oder Simulationsergebnisse grafisch darstellen. Ausgehend von den Blocksymbolen können für die Prozessobjekte auch Ansichten geöffnet werden, die neben der reinen Beobachtung eines Prozessobjekts auch dessen Bedienung ermöglichen. Ausgehend von derartigen Ansichten können weitere Ansichten geöffnet werden, beispielsweise Trendkurven oder eine Alarmansicht mit den für das jeweilige Prozessobjekt relevanten Alarmen. Trendkurven zeigen üblicherweise den Verlauf eines jeweiligen Prozesswertes als Funktion der Zeit. Alarme werden meist in Form einer Meldefolgeanzeige dargestellt, d.h. in Form einer chronologischen Liste der jeweils aufgetretenen Prozessalarme.

Im Stand der Technik sind auch schon Ansätze bekannt, Trendkurven mit geeigneten Informationen über Prozessalarme anzureichern. In diesem Fall wird auf einem Bildschirm oder dergleichen separat von der Trendkurve, beispielsweise unterhalb der Trendkurve, eine Meldefolge von Prozessalarmen angezeigt. Die Meldefolge kann über einen Filter derart parametriert werden, dass nur Prozessalarme angezeigt werden, die dem der Trendkurve zu Grunde liegenden Prozessobjekt zugeordnet sind.

Die Wechselwirkung zwischen diesen beiden Anzeigen ist deutlich eingeschränkt. Es ist stets eine entsprechende Projektierung erforderlich. Eine Bedienperson muss weiterhin zur Laufzeit der Trendkurve und der Meldefolgeanzeige sowohl die Trendkurve als auch die Meldefolgeanzeige betrachten und die zugehörigen Informationen mental und intellektuell miteinander in Verbindung bringen. Für eine effiziente Bedienung und Beobachtung fehlen bei diesem Ansatz auch Abstraktionsmechanismen. Die Bedienperson wird mit allen zu Grunde liegenden Prozessalarmen und allen Details konfrontiert, so dass die Bedienperson sozusagen mit Informationen erschlagen wird, obwohl die Bedienperson oftmals nur interessiert, ob es überhaupt einen Prozessalarm gibt bzw. bei mehreren Prozessalarmen, welches der wichtigste aufgetretene Prozessalarm ist.

Die Aufgabe der vorliegenden Erfindung besteht darin, Möglichkeiten zu schaffen, die es der Bedienperson ermöglichen, dynamisch Informationen abzurufen, mittels derer für die Bedienperson auf einfache und intuitive Weise eine Zuordnung von Prozessalarmen zu bestimmten Prozessdaten möglich ist.

Die Aufgabe wird durch ein Visualisierungsverfahren mit den Merkmalen des Anspruchs 1 gelöst. Vorteilhafte Ausgestaltungen des Visualisierungsverfahrens sind Gegenstand der abhängigen Ansprüche 2 bis 4.

Erfindungsgemäß wird ein Visualisierungsverfahren der eingangs genannten Art dadurch ausgestaltet,
- dass das Alarmsystem zusammen mit der Historie des selektierten Prozessdatums für denselben Darstellungszeitraum auch die Historie der dem jeweiligen Prozessobjekt zugeordneten Prozessalarme anfordert und
- dass das Alarmsystem die Prozessdatenpunkte in der Grafik in einer Codierung darstellt, die für den jeweiligen Prozessdatenpunkt jeweils die höchste Priorität angibt, mit der während des jeweiligen Erfassungszeitraums Prozessalarme aufgetreten sind.

Durch diese Vorgehensweise werden die zugehörigen Prozessalarme in die dargestellte Grafik als solche, d.h. in die Trendkurve selbst, integriert. Die Bedienperson kann dadurch in der dargestellten Grafik selbst direkt erkennen, ob und gegebenenfalls welche Prozessalarme aufgetreten sind bzw. welche Priorität die aufgetretenen Prozessalarme aufweisen. Eine Parametrierung eines Filters für die Prozessalarme durch die Bedienperson ist nicht erforderlich. Aufgrund der Codierung der Prozessdatenpunkte mit der höchsten Priorität eines aufgetretenen Prozessalarms steht der Bedienperson sofort die Information über den wichtigsten Alarm zur Verfügung. Dadurch kann die Bedienperson in einem nachfolgenden Schritt direkt und unmittelbar genau diejenigen Bereiche der dargestellten Grafik selektieren, in denen hochpriore Prozessalarme aufgetreten sind.

Vorzugsweise umfasst die Codierung zusätzlich, ob der jeweilige Erfassungszeitraum nur einen einzigen Erfassungszeitpunkt oder mehrere Erfassungszeitpunkte umfasst. Die Prozessdatenpunkte werden also je nachdem, ob der jeweilige Erfassungszeitraum - also der einem einzelnen Prozessdatenpunkt jeweils zugrunde liegende Zeitraum - nur einen einzigen Erfassungszeitpunkt oder mehrere Erfassungszeitpunkte umfasst, unterschiedlich codiert. Dadurch kann die Bedienperson sofort erkennen, ob an dieser Stelle eine genauere Auflösung zu verbesserten Erkenntnissen führen kann.

Vorzugsweise umfasst die Codierung zusätzlich eine Angabe über die Zuverlässigkeit des jeweiligen Prozessdatenpunktes. Dies kann für die Bedienperson bezüglich der Beurteilung der Relevanz der Prozessdatenpunkte von Bedeutung sein.

Vorzugsweise ermittelt das Alarmsystem aufgrund einer Selektion mindestens eines Prozessdatenpunktes durch die mindestens eine Bedienperson automatisch eine Meldefolgeanzeige, welche zumindest für den dem mindestens einen selektierten Prozessdatenpunkt zu Grunde liegenden Erfassungszeitraum die Prozessalarme mit der höchsten auftretenden Priorität auflistet, und zeigt sie der mindestens einen Bedienperson an. Dadurch ist für die Bedienperson auf einfache Weise eine Analyse der dargestellten Grafik möglich.

Die Aufgabe wird weiterhin durch ein Computerprogramm mit den Merkmalen des Anspruchs 5 gelöst. Vorteilhafte Ausgestaltungen des Computerprogramms sind Gegenstand der abhängigen Ansprüche 6 bis 8.

Erfindungsgemäß wird ein Computerprogramm der eingangs genannten Art derart ausgestaltet, dass das Alarmsystem aufgrund der Abarbeitung des Maschinencodes
- zusammen mit der Historie des selektierten Prozessdatums für denselben Darstellungszeitraum auch die Historie von von dem Prozessleitsystem zu den Erfassungszeitpunkten im Sinne einer Historie archivierten, dem jeweiligen Prozessobjekt zugeordneten Prozessalarmen anfordert und
- die Prozessdatenpunkte in der Grafik in einer Codierung darstellt, die für den jeweiligen Prozessdatenpunkt jeweils die höchste Priorität angibt, mit der während des jeweiligen Erfassungszeitraums Prozessalarme aufgetreten sind.

Die dadurch erreichten Vorteile korrespondieren mit denen des Visualisierungsverfahrens. Weiterhin korrespondieren auch die vorteilhaften Ausgestaltungen des Computerprogramms mit den vorteilhaften Ausgestaltungen des Visualisierungsverfahrens. Gleiches gilt für die durch die jeweiligen vorteilhaften Ausgestaltungen jeweils erreichten Vorteile.

Die Aufgabe wird weiterhin durch ein Alarmsystem mit den Merkmalen des Anspruchs 9 gelöst. Erfindungsgemäß ist ein Alarmsystem der eingangs genannten Art mit einem erfindungsgemäßen Computerprogramm programmiert, so dass das Alarmsystem im Betrieb zusätzlich auch die erfindungsgemäßen Verfahrensschritte des Computerprogramms ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Überblick über eine Anlage,
- FIG 2: ein Prozessobjekt,
- FIG 3: ein Ablaufdiagramm,
- FIG 4: ein Ablaufdiagramm,
- FIG 5: ein Ablaufdiagramm,
- FIG 6: einen zeitlichen Verlauf eines Prozessdatums und von Prozessalarmen und eine Grafik,
- FIG 7: einen zeitlichen Verlauf eines Prozessdatums und von Prozessalarmen und eine Grafik,
- FIG 8: verschiedene Codierungen,
- FIG 9: ein Ablaufdiagramm und
- FIG 10: eine Meldefolgeanzeige.

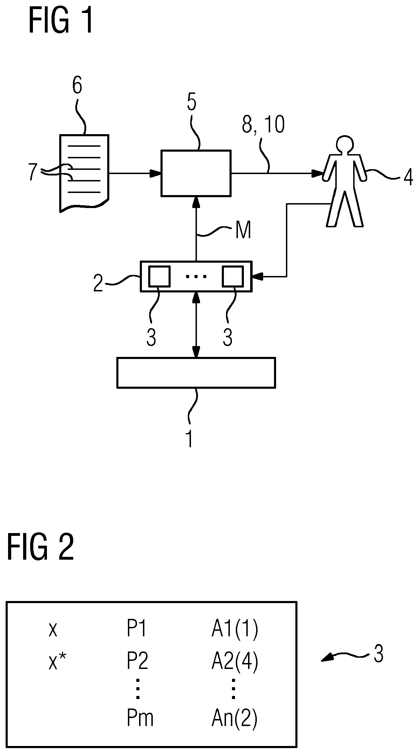

Gemäß FIG 1 wird eine industrielle technische Anlage 1 von einem Prozessleitsystem 2 gesteuert und überwacht. Die industrielle technische Anlage 1 kann beispielsweise eine verfahrenstechnische Anlage sein. Es kann sich aber auch um eine andere Anlage handeln. Das Prozessleitsystem 2 umfasst Steuereinrichtungen für einzelne Teile der industriellen technischen Anlage 1. Die Einwirkung der Steuereinrichtungen auf den jeweiligen Teil der industriellen technischen Anlage 1 und die Wechselwirkung der Steuereinrichtungen miteinander wird von übergeordneten Rechnern geführt.

Dem Prozessleitsystem 2 sind sogenannte Prozessobjekte 3 bekannt. Die Prozessobjekte 3 können beispielsweise im Rahmen einer Projektierung des Prozessleitsystems 2 festgelegt werden. Ein Beispiel eines Prozessobjekts 3 ist ein Regler, der eine Größe der industriellen technischen Anlage 1 regelt. Es gibt aber auch andere Prozessobjekte 3.

Den Prozessobjekten 3 sind entsprechend der Darstellung in FIG 2 jeweils Prozessdaten x, x*, Pi (i = 1, 2, ...) zugeordnet. Die Prozessdaten x, x*, Pi können beispielsweise Istgrößen x, Sollgrößen x*, Parameter Pi eines Reglers und dergleichen mehr sein. Die Parameter Pi können beispielsweise im Falle eines PI-Reglers die Proportionalverstärkung, die Nachstellzeit und der Betrag der maximalen Ausgangsgröße des Reglers sein. Den Prozessobjekten 3 sind entsprechend der Darstellung in FIG 2 weiterhin Prozessalarme Aj (j = 1, 2, ...) zugeordnet. Die Prozessalarme Aj weisen jeweils eine Priorität auf. Die jeweilige Priorität ist in FIG 2 hinter dem jeweiligen Prozessalarm Aj in Klammern gesetzt. Rein beispielhaft wird nachfolgend angenommen, dass der Prozessalarme A1 die niedrigste Priorität 1 aufweist, der Prozessalarm A2 die höchste Priorität 4 und der Prozessalarm An eine mittlere Priorität 2. Dem Prozessleitsystem 2 sind sowohl die Zuordnung der jeweiligen Prozessdaten x, x*, Pi als auch die Zuordnung der jeweiligen Prozessalarme Aj zu den Prozessobjekten 3 bekannt.

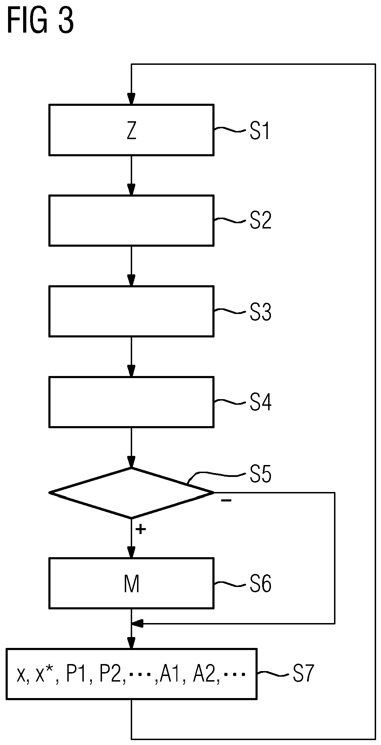

Das Prozessleitsystem 2 führt ein Steuer- und Überwachungsverfahren aus, das nachstehend in Verbindung mit FIG 3 näher erläutert wird.

Gemäß FIG 3 nimmt das Prozessleitsystem 2 in einem Schritt S1 einen aktuellen Zustand Z der industriellen technischen Anlage 1 entgegen. Der aktuelle Zustand Z umfasst insbesondere die Istgrößen x der Regler. In einem Schritt S2 nimmt das Prozessleitsystem 2 von einem Bediener 4 (siehe FIG 1) Eingaben entgegen. Die Eingaben können Vorgaben für die Prozessobjekte 3 umfassen, beispielsweise neue Sollgrößen x* für die Regler oder eine Änderung von Parametern Pi der Regler. Der Begriff "Bediener" wird im Rahmen der vorliegenden Erfindung in einem generischen Sinne verwendet. Es kann sich um einen einzelnen Bediener oder um mehrere Personen handeln.

In einem Schritt S3 bestimmt das Prozessleitsystem 2 Steuergrößen für die industrielle technische Anlage 1. Das Prozessleitsystem 2 verwertet bei der Ermittlung der Steuergrößen insbesondere die den einzelnen Prozessobjekten 3 zugeordneten Prozessdaten x, x*, Pi. In einem Schritt S4 gibt das Prozessleitsystem 2 die ermittelten Steuergrößen an die industrielle technische Anlage 1 aus und steuert dadurch die industrielle technische Anlage 1.

In einem Schritt S5 prüft das Prozessleitsystem 2, ob für einen Prozessalarm Aj eine Auslösebedingung erfüllt ist. Die Prüfung wird von dem Prozessleitsystem 2 einzeln für jedes Prozessobjekt 3 und innerhalb des jeweiligen Prozessobjekts 3 einzeln für jeden Prozessalarm Aj ausgeführt. Die Frage, ob die jeweilige Auslösebedingung erfüllt ist oder nicht, entscheidet das Prozessleitsystem 2 anhand derer dem jeweiligen Prozessobjekt 3 zugeordneten Prozessdaten x, x*, Pi. Die Auslösebedingung kann beispielsweise erfüllt sein, wenn ein Prozessdatum x, x*, Pi des entsprechenden Prozessobjekts 3 - insbesondere ein Istwert x - einen bestimmten vorgegebenen Wert überschreitet oder unterschreitet oder wenn bestimmte Wertekombinationen gegeben sind oder andere abgeleitete Werte gewisse Grenzen überschreiten.

Wenn die Auslösebedingung erfüllt ist, löst das Prozessleitsystem 2 in einem Schritt S6 automatisch den entsprechenden Prozessalarm Aj aus und übermittelt eine entsprechende Alarmmeldung M an ein Alarmsystem 5 (siehe FIG 1). Anderenfalls, wenn also die Auslösebedingung nicht erfüllt ist, wird der Schritt S6 übersprungen.

In einem Schritt S7 archiviert das Prozessleitsystem 2 die Prozessdaten x, x*, Pi und die momentan ausgelösten Prozessalarme Aj. Das Archivieren erfolgt im Sinne einer Historie. Den jeweils archivierten Werten x, x*, Pi, Aj ist also zum einen der jeweilige Erfassungszeitpunkt zugeordnet. Weiterhin werden die archivierten Werte nicht überschrieben, sondern die neu zu archivierenden Werte treten zu den bereits archivierten Werten hinzu, so dass sowohl die neu zu archivierenden Werte als auch die bereits archivierten Werte zu späteren Zeitpunkten für Auswertungen zur Verfügung stehen.

Die Vorgehensweise von FIG 3 wird zyklisch immer wieder wiederholt. Vom Schritt S7 aus geht das Prozessleitsystem 2 somit wieder zum Schritt S1 über.

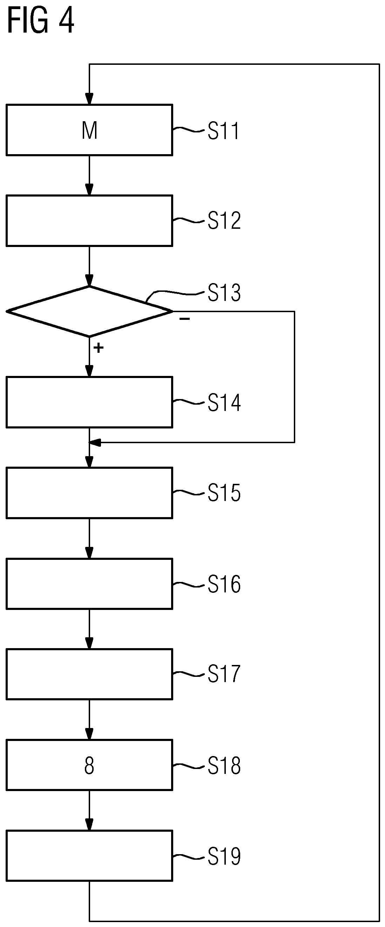

Das Alarmsystem 5 ist mit einem Computerprogramm 6 programmiert. Das Computerprogramm 6 umfasst Maschinencode 7, der von dem Alarmsystem 5 abarbeitbar ist. Aufgrund der Abarbeitung des Maschinencodes 7 führt das Alarmsystem 5 (unter anderem) ein Visualisierungsverfahren aus, das nachstehend in Verbindung mit FIG 4 näher erläutert wird.

In einem Schritt S11 nimmt das Alarmsystem 5 vom Prozessleitsystem 2 die übermittelten Alarmmeldungen M entgegen. In einem Schritt S12 gibt das Alarmsystem 5 die entsprechenden Prozessalarme Aj - genauer: entsprechende Meldungen - an den Bediener 4 aus. Die Ausgabe des jeweiligen Prozessalarms Aj an den Bediener 4 kann beispielsweise durch eine visuelle Anzeige erfolgen. Gegebenenfalls kann die visuelle Anzeige durch eine akustische Meldung unterstützt werden.

In einem Schritt S13 prüft das Alarmsystem 5, ob es vom Bediener 4 eine Quittierung für den jeweiligen Prozessalarm Aj erhalten hat. Solange dies nicht der Fall ist, überspringt das Alarmsystem 5 einen Schritt S14. Wenn das Alarmsystem 5 hingegen vom Bediener 4 eine Quittierung für den entsprechenden Prozessalarm Aj erhalten hat, terminiert das Alarmsystem 5 im Schritt S14 das Ausgeben des jeweiligen Prozessalarms Aj an den Bediener 4.

In einem Schritt S15 nimmt das Alarmsystem 5 vom Bediener 4 eine Selektion eines Prozessdatums x, x*, Pi entgegen. Der Bediener 4 kann im Schritt S15 prinzipiell ein beliebiges Prozessdatum x, x*, Pi selektieren. Oftmals wird es sich aber um einen Istwert x handeln. In einem Schritt S16 nimmt das Alarmsystem 5 vom Bediener 4 weiterhin einen Darstellungszeitraum entgegen. Da der Darstellungszeitraum vom Bediener 4 festgelegt wird, ist - aus Sicht des Alarmsystems 5 - nicht vorab bekannt, welche Größe der Darstellungszeitraum aufweist. Aus Sicht des Alarmsystems 5 kann der Darstellungszeitraum somit prinzipiell beliebig sein.

In einem Schritt S17 fordert das Alarmsystem 5 vom Prozessleitsystem 2 für den vorgegebenen Darstellungszeitraum die Historie des selektierten Prozessdatums x, x*, Pi an. Weiterhin fordert das Alarmsystem 5 im Schritt S17 vom Prozessleitsystem 2 zugleich auch für denselben Darstellungszeitraum die Historie der dem jeweiligen Prozessobjekt 3 zugeordneten Prozessalarme Aj an.

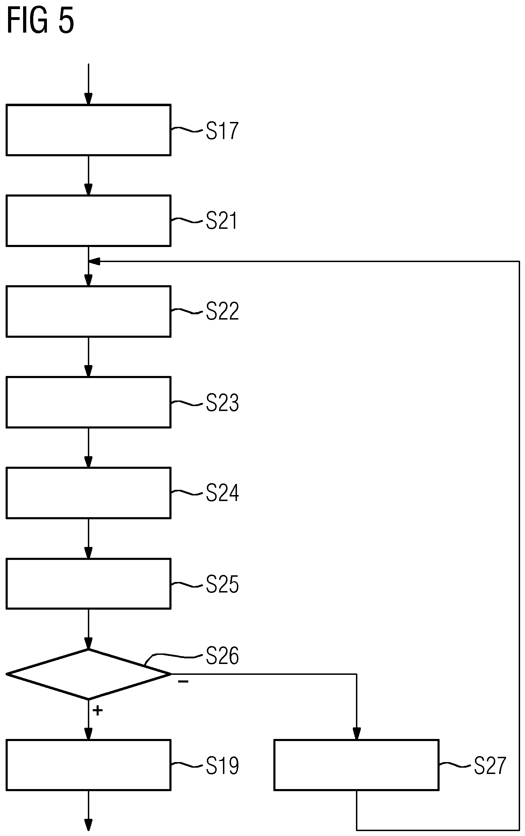

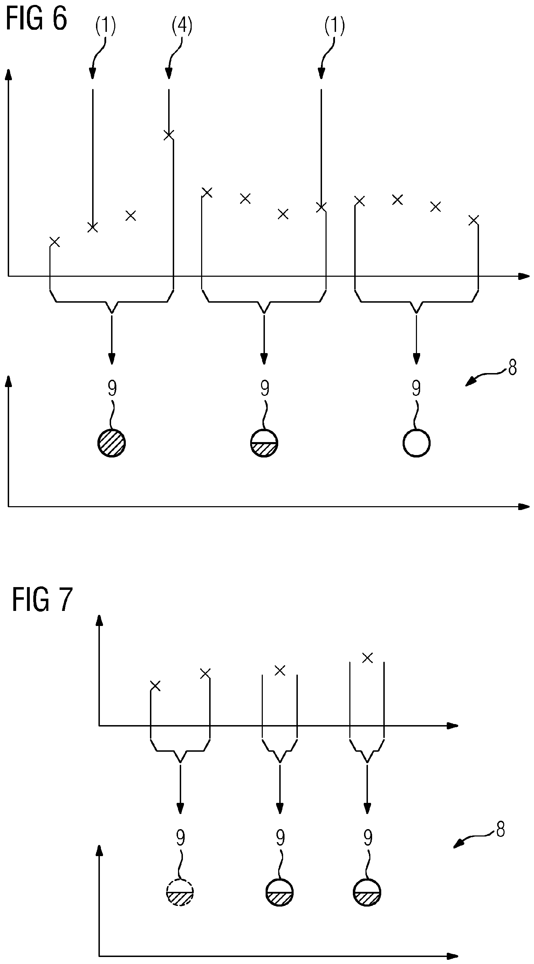

In einem Schritt S18 ermittelt das Alarmsystem 5 eine Grafik 8 (siehe FIG 1 und 6). Die Grafik 8 stellt für den vorgegebenen Darstellungszeitraum den zeitlichen Verlauf des selektierten Prozessdatums x, x*, Pi dar. Die Grafik 8 gibt das Alarmsystem 5 in einem Schritt S19 an den Bediener 4 aus. Der Schritt S18 wird in Verbindung mit FIG 5 detailliert erläutert werden.

Gemäß FIG 5 selektiert das Alarmsystem 5 zur Ermittlung der Grafik 8 zunächst in einem Schritt S21 einen ersten Prozessdatenpunkt 9 (siehe FIG 6). In einem Schritt S22 ermittelt das Alarmsystem 5 für den selektierten Prozessdatenpunkt 9 einen zugehörigen Erfassungszeitraum.

In einem Schritt S23 ermittelt das Alarmsystem 5 sodann anhand der in diesem Erfassungszeitraum archivierten Werte des selektierten Prozessdatums x, x*, Pi den zugehörigen Wert des selektierten Prozessdatenpunktes 9. Beispielsweise kann das Alarmsystem 5 als entsprechenden Wert den Mittelwert der Werte des selektierten Prozessdatums x, x*, Pi heranziehen. Alternativ kann der Wert des jeweiligen Prozessdatenpunktes 9 beispielsweise durch einen Medianwert, das Minimum, das Maximum oder einen anderen statistischen Wert des selektierten Prozessdatums x, x*, Pi bestimmt sein.

In einem Schritt S24 ermittelt das Alarmsystem 5 eine Codierung für den im Schritt S23 ermittelten Wert. Die Codierung ist dafür charakteristisch, was die höchste Priorität ist, mit der während des jeweiligen Erfassungszeitraums Prozessalarme Aj aufgetreten sind. In einem Schritt S25 ordnet das Alarmsystem 5 die im Schritt S24 ermittelte Codierung dem selektierten Prozessdatenpunkt 9 zu.

In einem Schritt S26 prüft das Alarmsystem 5, ob es die Schritte S22 bis S25 bereits für alle Prozessdatenpunkte 9 ausgeführt hat. Wenn dies nicht der Fall ist, geht das Alarmsystem 5 zu einem Schritt S27 über, in dem das Alarmsystem 5 den nächsten Prozessdatenpunkt 9 selektiert. Sodann geht das Alarmsystem 5 zum Schritt S22 zurück. Anderenfalls ist die Vorgehensweise von FIG 5 beendet.

Die Grafik 8 umfasst somit entsprechend der Darstellung in FIG 6 eine Anzahl von Prozessdatenpunkten 9. FIG 6 zeigt in ihrem oberen Bereich, angedeutet jeweils durch kleine Kreuzchen, den Wert des selektierten Prozessdatums x, x*, Pi zum jeweiligen Erfassungszeitpunkt. Oberhalb des jeweiligen Kreuzchens ist weiterhin die höchste Priorität der zum jeweiligen Erfassungszeitpunkt ausgelösten Prozessalarme Aj eingetragen. Sowohl die einzelnen Werte des selektierten Prozessdatums x, x*, Pi als auch die jeweils ausgelösten Prozessalarme Aj können von Erfassungszeitpunkt zu Erfassungszeitpunkt variieren.

Entsprechend der Darstellung in FIG 6 kann es - bei entsprechender Vorgabe des Erfassungszeitraums durch den Bediener 4 - geschehen, dass einige oder alle der Erfassungszeiträume jeweils mehrere Erfassungszeitpunkte umfassen. Entsprechend der - rein beispielhaften - Darstellung von FIG 5 sind beispielsweise in dem Erfassungszeitraum für den vorderen Prozessdatenpunkt 9 Prozessalarme Aj mit der Priorität 1 und mit der Priorität 4 aufgetreten. Weiterhin sind in dem Erfassungszeitraum für den mittleren Prozessdatenpunkt 9 Prozessalarme Aj mit der Priorität 1 aufgetreten. In dem Erfassungszeitraum für den hinteren Prozessdatenpunkt 9 sind keine Prozessalarme Aj aufgetreten.

In diesem Fall erfolgt die Codierung des vorderen Prozessdatenpunkts 9 entsprechend der Priorität 4, beispielsweise, wie in FIG 5 dargestellt, durch ein vollständig ausgefülltes Element, hier einen Kreis. Die Codierung des mittleren Prozessdatenpunkts 9 erfolgt entsprechend der Priorität 1, beispielsweise, wie in FIG 5 dargestellt, durch ein teilweise ausgefülltes Element. Die Codierung des hinteren Prozessdatenpunkts 9 erfolgt entsprechend der Priorität 0 (= keine Prozessalarme Aj) aufgetreten, beispielsweise, wie in FIG 5 dargestellt, durch ein nicht ausgefülltes Element.

Die in FIG 6 gezeigten Codierungen sind rein beispielhaft. Es können auch andere Codierungen gewählt werden. Beispielsweise ist es möglich, für die Codierung der Priorität des Prozessalarms Aj eine Farbcodierung oder eine Formcodierung zu wählen. Im Falle einer Farbcodierung kann beispielsweise rot der höchsten Priorität, gelb einer mittleren Priorität und grün der Priorität 0 (also dem Fall, dass kein Prozessalarm Aj aufgetreten ist) zugeordnet sein. Es sind auch andere oder weitere Abstufungen möglich, beispielsweise orange oder halb gelb und halb rot oder blau.

Aufgrund des Umstands, dass der Darstellungszeitraum vom Bediener 4 vorgegeben wird, kann es weiterhin auch geschehen, dass einige oder alle der Erfassungszeiträume jeweils nur einen einzigen Erfassungszeitpunkt umfassen. In diesem Fall wird ebenso vorgegangen. Jedoch liegen in dem Fall, dass der jeweilige Erfassungszeitraum nur einen einzigen Erfassungszeitpunkt umfasst, dem jeweiligen Prozessdatenpunkt 9 direkt und unmittelbar die zum zugehörigen Erfassungszeitpunkt erfassten Prozessdaten x, x*, Pi und Prozessalarme Aj zu Grunde. Es ist aber möglich, in der Codierung zu unterscheiden, ob ein jeweiliger Erfassungszeitraum nur einen einzigen Erfassungszeitpunkt umfasst oder ob er mehrere Erfassungszeitpunkte umfasst. Dies wird nachstehend in Verbindung mit FIG 7 näher erläutert.

Gemäß der Darstellung in FIG 7 umfasst der vom Bediener 4 vorgegebene Darstellungszeitraum (rein beispielhaft) vier Erfassungszeitpunkte, während die Anzahl an Prozessdatenpunkten 9 drei beträgt. Der Erfassungszeitraum eines der Prozessdatenpunkte 9 umfasst somit zwei Erfassungszeitpunkte, während die Erfassungszeiträume der beiden anderen Prozessdatenpunkte 9 jeweils nur einen einzigen Erfassungszeitpunkt umfassen. Der Einfachheit halber wird weiterhin angenommen, dass während aller Erfassungszeitpunkte einheitlich derselbe Alarmzustand besteht, beispielsweise ein Prozessalarm Aj der Priorität 1 ansteht. Die nachfolgenden Aussagen sind aber auch anwendbar, wenn die Prioritäten der anstehenden Prozessalarme Aj der Erfassungszeitpunkte nicht einheitlich sind.

Entsprechend der Darstellung in FIG 7 werden diejenigen Prozessdatenpunkte 9, deren jeweiliger Erfassungszeitraum nur einen einzigen Erfassungszeitpunkt umfasst, mit einer durchgezogenen Umrandung dargestellt, während derjenige Prozessdatenpunkt 9, dessen Erfassungszeitraum mehrere Erfassungszeitpunkte umfasst, mit einer unterbrochenen Umrandung dargestellt wird. Aufgrund der unterschiedlichen Codierung der Prozessdatenpunkte 9 ist es somit möglich, direkt zu erkennen, ob der jeweilige Prozessdatenpunkt 9 noch weiter aufgelöst werden kann oder nicht.

Die obenstehend in Verbindung mit FIG 7 erläuterte Codierung kann selbst verständlich auch auf andere Art und Weise erfolgen. Beispielsweise kann eine Farbcodierung entsprechend abgestuft sein. Auch ist es möglich, beispielsweise eine Farbkodierung für die entsprechende Priorität der Prozessalarme Aj durch eine zusätzliche Angabe eines Symbols A oder B (je nachdem, ob der Erfassungszeitraum des jeweiligen Prozessdatenpunkts 9 nur einen einzigen Erfassungszeitpunkt oder mehrere Erfassungszeitpunkte umfasst) zu ergänzen.

Der Vorteil dieser Art der Darstellung liegt insbesondere darin, dass in dem Fall, dass der Erfassungszeitraum eines jeweiligen Prozessdatenpunkts 9 mehrere Erfassungszeitpunkte umfasst, anhand des Datenwerts des jeweiligen Prozessdatenpunkts 9 oftmals nicht mehr erkennbar ist, ob und gegebenenfalls warum ein bestimmter Prozessalarm Aj ausgelöst wurde. Durch die soeben erläuterte Art und Weise der Codierung wird dem Bediener 4 jedoch die Information vermittelt, an welchen Stellen er eine verfeinerte Darstellung von Prozessdaten x, x*, Pi anfordern muss, um eine vollständige Information zu erhalten.

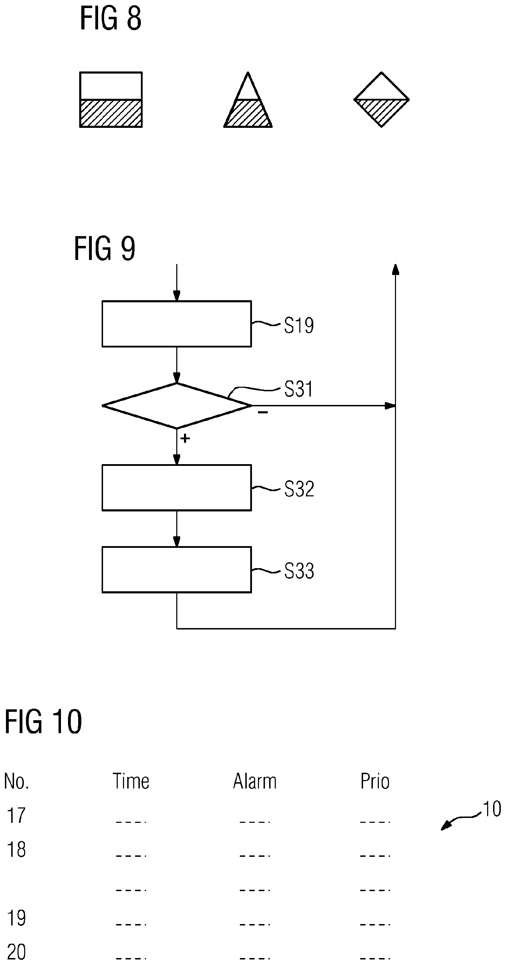

Weiterhin ist es möglich, dass die Codierung der Prozessdatenpunkte 9 zusätzlich eine Angabe über die Zuverlässigkeit des jeweiligen Prozessdatenpunktes 9 umfasst. Dies wird nachfolgend in Verbindung mit FIG 8 erläutert. FIG 8 zeigt eine Codierung, die in Abhängigkeit von der Zuverlässigkeit des jeweiligen Prozessdatenpunktes 9 variiert. Beispielsweise kann entsprechend der Darstellung in FIG 8 die Zuverlässigkeit des jeweiligen Prozessdatenpunktes 9 in mehrere Stufen eingeteilt sein. Die in FIG 8 gewählte Unterteilung in drei Stufen ist rein beispielhaft. Je nach Zuverlässigkeit des jeweiligen Prozessdatenpunktes 9 wird die Codierung des jeweiligen Prozessdatenpunktes 9 gewählt. Beispielsweise kann entsprechend der Darstellung in FIG 8 die Kontur des jeweiligen Prozessdatenpunktes 9 variiert werden. Entsprechend der Darstellung in FIG 8 steht beispielsweise ein auf einer Kante stehendes Rechteck für eine hohe Zuverlässigkeit, ein auf einer Kante stehendes Dreieck für eine mittlere Zuverlässigkeit und ein auf einer Ecke stehendes Rechteck für eine niedrige Zuverlässigkeit des jeweiligen Prozessdatenpunktes 9. Es sind aber selbstverständlich auch andere Arten der Codierung möglich. Angezeigt wird für den jeweiligen Prozessdatenpunkt 9 die Codierung für die niedrigste Zuverlässigkeit, die während des zugehörigen Erfassungszeitraums aufgetreten ist.

Zur Ermittlung des Grades der Zuverlässigkeit kann das Prozessleitsystem 2 beispielsweise für Sensoren oder dergleichen einen Drahtbruch oder einen Kurzschluss von Anschlussleitungen erkennen. Wenn und solange der Sensor ordnungsgemäß funktioniert, insbesondere kein Drahtbruch und/oder kein Kurzschluss der Anschlussleitungen erkannt wird, weist ein zugehöriger Prozessdatenpunkt 9 eine hohe Zuverlässigkeit auf. Kurz nach Auftreten eines Drahtbruchs oder eines Kurzschlusses weist ein Prozessdatenpunkt 9 eine mittlere Zuverlässigkeit auf. Nach noch längerer Zeit weist ein Prozessdatenpunkt 9 nur noch eine niedrige Zuverlässigkeit auf. Wenn die Anschlussleitungen wieder repariert sind, ist die Zuverlässigkeit des Prozessdatenpunktes 9 wieder hoch.

Auch im Rahmen von FIG 8 wurde angenommen, dass einheitlich derselbe Alarmzustand besteht, beispielsweise ein Prozessalarme Aj der Priorität 1 ansteht. Die vorstehenden Aussagen sind aber auch anwendbar, wenn die Prioritäten der anstehenden Prozessalarme Aj der Erfassungszeitpunkte nicht einheitlich sind.

Die vorliegende Erfindung kann weiterhin auch in anderer Weise ausgestaltet werden. Beispielsweise ist es möglich, dass das Alarmsystem 5 entsprechend der Darstellung in FIG 9 nach der Darstellung der Grafik 8 im Schritt S19 in einem Schritt S31 prüft, ob der Bediener 4 mindestens einen - in der Regel exakt einen - Prozessdatenpunkt 9 selektiert hat. Die Selektion kann beispielsweise durch "Anklicken" des entsprechenden Prozessdatenpunktes 9 mit einer Computermaus oder dergleichen erfolgen.

Wenn der Bediener 4 mindestens einen Prozessdatenpunkt 9 selektiert hat, geht das Alarmsystem 5 zu einem Schritt S32 über. Im Schritt S32 ermittelt das Alarmsystem 5 für die selektierten Prozessdatenpunkte 9 zunächst den Anfang und das Ende des entsprechenden Erfassungszeitraums und die zugehörigen Erfassungszeitpunkte. In einem Schritt S33 ermittelt das Alarmsystem sodann für den Erfassungszeitraum bzw. die zugehörigen Erfassungszeitpunkte automatisch eine Meldefolgeanzeige 10 (siehe FIG 10) und zeigt dem Bediener 4 die Meldefolgeanzeige 10 an. Die Meldefolgeanzeige 10 listet entsprechend der Darstellung in FIG 10 - vorzugsweise als zeitliche Sequenz und mit Angabe der jeweiligen Erfassungszeitpunkte - zumindest für den im Schritt S32 ermittelten Erfassungszeitraum die aufgetretenen Prozessalarme Aj mit der jeweils höchsten Priorität auf. Gegebenenfalls können auch die weiteren aufgetretenen Prozessalarme Aj mit niedrigerer Priorität mit enthalten sein. Zusätzlich können der Erfassungszeitraum als solcher und/oder eine Identifikation und/oder ein Klartextname des Prozessobjekts 3 und/oder des Prozessdatums x, x*, Pi mit angezeigt werden.

Vorstehend wurden verschiedene vorteilhafte Ausgestaltungen der vorliegenden Erfindung erläutert. In ihrem Kern betrifft die vorliegende Erfindung jedoch folgenden Sachverhalt:

Ein Prozessleitsystem 2 steuert und überwacht eine industrielle technische Anlage 1. Dem Prozessleitsystem 2 sind Prozessobjekte 3 und die Zuordnung von Prozessdaten x, x*, Pi und Prozessalarmen Aj zu den Prozessobjekten 3 bekannt. Die Prozessalarme Aj weisen jeweils eine Priorität auf. Das Prozessleitsystem 2 löst automatisch einen Prozessalarm Aj aus, wenn die Prozessdaten x, x*, Pi eine Auslösebedingung erfüllen. In diesem Fall übermittelt das Prozessleitsystem 2 eine entsprechende Alarmmeldung M an ein Alarmsystem 5, das den entsprechenden Prozessalarm Aj an eine Bedienperson 4 ausgibt. Das Prozessleitsystem 2 archiviert zu Erfassungszeitpunkten die Prozessdaten x, x*, Pi und die ausgelösten Prozessalarme Aj im Sinne einer Historie. Das Alarmsystem 5 fordert aufgrund der Selektion eines Prozessdatums x, x*, Pi und der Vorgabe eines Darstellungszeitraums durch die Bedienperson 4 vom Prozessleitsystem 2 für den Darstellungszeitraum die Historie des selektierten Prozessdatums x, x*, Pi und zugleich auch die Historie der dem jeweiligen Prozessobjekt 3 zugeordneten Prozessalarme Aj an. Das Alarmsystem 5 gibt den zugehörigen zeitlichen Verlauf des Prozessdatums x, x*, Pi als Grafik 8 an die Bedienperson 4 aus. Die Grafik 8 umfasst eine Anzahl von Prozessdatenpunkten 9, die das Alarmsystem 5 anhand der Werte des selektierten Prozessdatums x, x*, Pi eines jeweiligen Erfassungszeitraums ermittelt. Das Alarmsystem 5 stellt die Prozessdatenpunkte 9 in der Grafik 8 in einer Codierung dar, die für den jeweiligen Prozessdatenpunkt 9 jeweils die höchste Priorität angibt, mit der während des jeweiligen Erfassungszeitraums Prozessalarme Aj aufgetreten sind.

Die vorliegende Erfindung weist viele Vorteile auf. Insbesondere ergibt sich eine einfache, intuitive Handhabung durch die Bedienperson 4. Eine simultane Handhabung verschiedener Darstellungen - insbesondere einer Trendkurve einerseits und einer Alarmliste andererseits - ist nicht erforderlich. Weiterhin ist direkt aus der Grafik 8 heraus der Aufruf der Meldefolgeanzeige 10 möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: industrielle technische Anlage
- 2: Prozessleitsystem
- 3: Prozessobjekte
- 4: Bediener
- 5: Alarmsystem
- 6: Computerprogramm
- 7: Maschinencode
- 8: Grafik
- 9: Prozessdatenpunkte
- 10: Meldefolgeanzeige

- Aj: Prozessalarme
- M: Alarmmeldung
- S1 bis S33: Schritte
- x, x*, Pi: Prozessdaten
- Z: Zustand

## Patentansprüche

1. Visualisierungsverfahren für einem Prozessobjekt (3) zugeordnete Prozessdaten (x, x*, Pi) und Prozessalarme (Aj),
- wobei eine industrielle technische Anlage (1) von einem Prozessleitsystem (2) gesteuert und überwacht wird,
- wobei dem Prozessleitsystem (2) Prozessobjekte (3) und die Zuordnung der jeweiligen Prozessdaten (x, x*, Pi) und der jeweiligen Prozessalarme (Aj) zu den Prozessobjekten (3) bekannt sind,
- wobei die Prozessalarme (Aj) jeweils eine Priorität aufweisen,
- wobei das Prozessleitsystem (2) automatisch einen Prozessalarm (Aj) des jeweiligen Prozessobjekts (3) auslöst, wenn die dem jeweiligen Prozessobjekt (3) zugeordneten Prozessdaten (x, x*, Pi) eine vorbestimmte Auslösebedingung erfüllen,
- wobei das Prozessleitsystem (2) beim Auslösen eines Prozessalarms (Aj) eine entsprechende Alarmmeldung (M) an ein Alarmsystem (5) übermittelt,
- wobei das Alarmsystem (5) den entsprechenden Prozessalarm (Aj) an mindestens eine Bedienperson (4) ausgibt,
- wobei das Prozessleitsystem (2) zu Erfassungszeitpunkten jeweils die Prozessdaten (x, x*, Pi) und die momentan ausgelösten Prozessalarme (Aj) im Sinne einer Historie archiviert,
- wobei das Alarmsystem (5) aufgrund der Selektion eines Prozessdatums (x, x*, Pi) und der Vorgabe eines zugehörigen Darstellungszeitraums durch die mindestens eine Bedienperson (4) vom Prozessleitsystem (2) für den vorgegebenen Darstellungszeitraum die Historie des selektierten Prozessdatums (x, x*, Pi) anfordert und den zugehörigen zeitlichen Verlauf als Grafik (8) an die mindestens eine Bedienperson (4) ausgibt,
- wobei die Grafik (8) eine Anzahl von Prozessdatenpunkten (9) umfasst und
- wobei das Alarmsystem (5) die Prozessdatenpunkte (9) anhand der Werte des selektierten Prozessdatums (x, x*, Pi) eines für den jeweiligen Prozessdatenpunkt (9) charakteristischen jeweiligen Erfassungszeitraums ermittelt,
**dadurch gekennzeichnet,**
- **dass** das Alarmsystem (5) zusammen mit der Historie des selektierten Prozessdatums (x, x*, Pi) für denselben Darstellungszeitraum auch die Historie der dem jeweiligen Prozessobjekt (3) zugeordneten Prozessalarme (Aj) anfordert und
- **dass** das Alarmsystem (5) die Prozessdatenpunkte (9) in der Grafik (8) in einer Codierung darstellt, die für den jeweiligen Prozessdatenpunkt (9) jeweils die höchste Priorität angibt, mit der während des jeweiligen Erfassungszeitraums Prozessalarme (Aj) aufgetreten sind.

2. Visualisierungsverfahren nach Anspruch 1,
**dadurch gekennzeichnet,**
**dass** die Codierung zusätzlich umfasst, ob der jeweilige Erfassungszeitraum nur einen einzigen Erfassungszeitpunkt oder mehrere Erfassungszeitpunkte umfasst.

3. Visualisierungsverfahren nach Anspruch 1 oder 2,
**dadurch gekennzeichnet,**
**dass** die Codierung zusätzlich eine Angabe über die Zuverlässigkeit des jeweiligen Prozessdatenpunktes (9) umfasst.

4. Visualisierungsverfahren nach Anspruch 1, 2 oder 3,
**dadurch gekennzeichnet,**
**dass** das Alarmsystem (5) aufgrund einer Selektion mindestens eines Prozessdatenpunktes (9) durch die mindestens eine Bedienperson (4) automatisch eine Meldefolgeanzeige (10) ermittelt, welche zumindest für den dem mindestens einen selektierten Prozessdatenpunkt (9) zu Grunde liegenden Erfassungszeitraum die Prozessalarme (Aj) mit der höchsten auftretenden Priorität auflistet, und der mindestens einen Bedienperson (4) anzeigt.

5. Computerprogramm für ein Alarmsystem (5), wobei das Computerprogramm Maschinencode (7) umfasst, der von dem Alarmsystem (5) abarbeitbar ist, wobei das Alarmsystem (5) aufgrund der Abarbeitung des Maschinencodes (7)
- von einem eine industrielle technische Anlage (1) steuernden und überwachenden Prozessleitsystem (2) Alarmmeldungen (M) über auftretende, eine jeweilige Priorität aufweisende Prozessalarme (Aj) entgegennimmt und die auftretenden Prozessalarme (Aj) an mindestens eine Bedienperson ausgibt,
- aufgrund der Selektion eines einem Prozessobjekt (3) des Prozessleitsystems (2) zugeordneten Prozessdatums (x, x*, Pi) und der Vorgabe eines zugehörigen Darstellungszeitraums durch die mindestens eine Bedienperson (4) vom Prozessleitsystem (2) für den vorgegebenen Darstellungszeitraum die Historie von von dem Prozessleitsystem (2) zu Erfassungszeitpunkten erfassten und im Sinne einer Historie archivierten Werten des selektierten Prozessdatums (x, x*, Pi) anfordert und den zugehörigen zeitlichen Verlauf als eine Anzahl von Prozessdatenpunkten (9) umfassende Grafik (8) an die mindestens eine Bedienperson (4) ausgibt und
- die Prozessdatenpunkte (9) anhand der Werte des selektierten Prozessdatums (x, x*, Pi) eines für den jeweiligen Prozessdatenpunkt (9) charakteristischen jeweiligen Erfassungszeitraums ermittelt,
**dadurch gekennzeichnet,**
**dass** das Alarmsystem (5) aufgrund der Abarbeitung des Maschinencodes (7)
- zusammen mit der Historie des selektierten Prozessdatums (x, x*, Pi) für denselben Darstellungszeitraum auch die Historie von von dem Prozessleitsystem (2) zu den Erfassungszeitpunkten im Sinne einer Historie archivierten, dem jeweiligen Prozessobjekt (3) zugeordneten Prozessalarmen (Aj) anfordert und
- die Prozessdatenpunkte (9) in der Grafik (8) in einer Codierung darstellt, die für den jeweiligen Prozessdatenpunkt (9) jeweils die höchste Priorität angibt, mit der während des jeweiligen Erfassungszeitraums Prozessalarme (Aj) aufgetreten sind.

6. Computerprogramm nach Anspruch 5,
**dadurch gekennzeichnet,**
**dass** die Codierung aufgrund der Abarbeitung des Maschinencodes (7) zusätzlich umfasst, ob der jeweilige Erfassungszeitraum nur einen einzigen Erfassungszeitpunkt oder mehrere Erfassungszeitpunkte umfasst.

7. Computerprogramm nach Anspruch 5 oder 6,
**dadurch gekennzeichnet,**
**dass** die Codierung aufgrund der Abarbeitung des Maschinencodes (7) zusätzlich eine Angabe über die Zuverlässigkeit des jeweiligen Prozessdatenpunktes (9) umfasst.

8. Computerprogramm nach Anspruch 5, 6 oder 7,
**dadurch gekennzeichnet,**
**dass** das Alarmsystem (5) aufgrund der Abarbeitung des Maschinencodes (7) aufgrund einer Selektion mindestens eines Prozessdatenpunktes (9) durch die mindestens eine Bedienperson (4) automatisch eine Meldefolgeanzeige (10) ermittelt, welche zumindest für den dem mindestens einen selektierten Prozessdatenpunkt (9) zu Grunde liegenden Erfassungszeitraum die Prozessalarme (Aj) mit der höchsten auftretenden Priorität auflistet, und der mindestens einen Bedienperson (4) anzeigt.

9. Alarmsystem, wobei das Alarmsystem mit einem Computerprogramm (6) nach einem der Ansprüche 5 bis 8 programmiert ist, so dass das Alarmsystem im Betrieb die in einem der Ansprüche 5 bis 8 angegebenen Verfahrensschritte ausführt.

## Claims

1. Visualisation method for process data (x, x*, Pi) and process alarms (Aj) assigned to a process object (3),
- wherein an industrial technology plant (1) is controlled and monitored by a process control system (2),
- wherein process objects (3) and the assignment of the respective process data (x, x*, Pi) and of the respective process alarms (Aj) to the process objects (3) are known to the process control system (2),
- wherein the process alarms (Aj) each have a priority,
- wherein the process control system (2) automatically triggers a process alarm (Aj) of the respective process object (3) if the process data (x, x*, Pi) assigned to the respective process object (3) fulfils a predetermined trigger condition,
- wherein the process control system (2) transfers a corresponding alarm message (M) to an alarm system (5) when a process alarm (Aj) is triggered,
- wherein the alarm system (5) outputs the corresponding process alarm (Aj) to at least one operator (4),
- wherein the process control system (2) archives the process data (x, x*, Pi) and the currently triggered process alarms (Aj) at acquisition times in each case in the sense of a history,
- wherein the alarm system (5), as a result of the selection of a process data item (x, x*, Pi) and the specification of an associated display period by the at least one operator (4) requests the history of the selected process data item (x, x*, Pi) for the predetermined display period from the process control system (2) and outputs the associated time sequence as a graphic (8) to the at least one operator (4),
- wherein the graphic (8) comprises a number of process data points (9) and
- wherein the alarm system (5) establishes the process data points (9) on the basis of the values of the selected process data item (x, x*, Pi) of a respective acquisition period characteristic of the respective process data point (9),
**characterised in that**
- the alarm system (5), together with the history of the selected process data item (x, x*, Pi), also requests the history of the process alarms (Aj) assigned to the respective process object (3) for the same display period and
- the alarm system (5) presents the process data points (9) in the graphic (8) in an encoding, which in each case specifies the highest priority for the respective process data point (9) with which process alarms (Aj) have occurred during the respective acquisition period.

2. Visualisation method according to claim 1,
**characterised in that**
the encoding additionally comprises whether the respective acquisition period comprises just one single acquisition time or a number of acquisition times.

3. Visualisation method according to claim 1 or 2,
**characterised in that**
the encoding additionally comprises a specification about the reliability of the respective process data point (9).

4. Visualisation method according to claim 1, 2 or 3,
**characterised in that**
the alarm system (5), on the basis of a selection of at least one process data point (9) by the at least one operator (4), automatically establishes a notification sequence display (10), which lists, at least for the acquisition period underlying the at least one selected process data point (9), the process alarms (Aj) with the highest priority that have occurred, and displays them to the at least one operator (4).

5. Computer program for an alarm system (5), wherein the computer program comprises machine code (7) that is able to be processed by the alarm system (5), wherein the alarm system (5), as a result of processing of the machine code (7)
- accepts from a process control system (2) controlling and monitoring an industrial technology plant (1) alarm messages (M) about process alarms (Aj) having a respective priority that have occurred and outputs the process alarms (Aj) that have occurred to at least one operator,
- on the basis of the selection of a process data item (x, x*, Pi) assigned to a process object (3) of the process control system (2) and the specification of an associated display period by the at least one operator (4), requests from the process control system (2) for the predetermined display period the history of values of the selected process data item (x, x*, Pi) acquired by the process control system (2) at acquisition times and archived in the sense of a history and outputs the associated time sequence as a graphic (8) comprising a number of process data points (9) to the at least one operator (4) and
- establishes the process data points (9) on the basis of the values of the selected process data item (x, x*, Pi) of an acquisition period characteristic of the respective process data point (9),
**characterised in that**
the alarm system (5), on the basis of the processing of the machine code (7)
- together with the history of the selected process data item (x, x*, Pi) for the same display period, also requests the history of process alarms (Aj) assigned to the respective process object (3) archived by the process control system (2) at the acquisition times in the sense of a history and
- presents the process data points (9) in the graphic (8) in an encoding that specifies the highest priority for the respective process data point (9) in each case with which process alarms (Aj) have occurred during the respective acquisition period.

6. Computer program according to claim 5,
**characterised in that**
the encoding, as a result of the processing of the machine code (7), additionally comprises whether the respective acquisition period comprises just one single acquisition time or a number of acquisition times.

7. Computer program according to claim 5 or 6,
**characterised in that**
the encoding, as a result of the processing of the machine code (7), additionally comprises a specification about the reliability of the respective process data point (9).

8. Computer program according to claim 5, 6 or 7,
**characterised in that**
the alarm system (5), as a result of the processing of the machine code (7) as a result of a selection of at least one process data point (9) by the at least one operator (4), automatically establishes a notification sequence display (10), which lists, at least for the acquisition period underlying the at least one selected process data point (9), the process alarms (Aj) with the highest priority that have occurred and shows them to the at least one operator (4).

9. Alarm system, wherein the alarm system is programmed with a computer program (6) according to one of claims 5 to 8 so that, when it is operating, the alarm system carries out the method steps specified in one of claims 5 to 8.

## Revendications

1. Procédé de visualisation de données (x, x*, Pi) de processus et d'alertes (Aj) de processus associées à un objet (3) de processus,
- dans lequel on commande et on contrôle une installation (1) technique industrielle par un système (2) de conduite de processus,
- dans lequel des objets (3) de processus et l'association des données (x, x*, Pi) de processus respectives et des alertes (Aj) de processus respectives aux objets (3) de processus sont connus du système (2) de conduite de processus,
- dans lequel les alertes (Aj) de processus ont chacune une priorité,
- dans lequel le système (2) de conduite de processus déclenche automatiquement une alerte (Aj) de processus de l'objet (3) de processus respectif si les données (x, x*, Pi) de processus associées à l'objet (3) de processus respectif satisfont une condition de déclenchement définie à l'avance,
- dans lequel le système (2) de conduite de processus transmet au déclenchement d'une alerte (Aj) de processus un message (M) d'alerte correspondant à un système (5) d'alerte,
- dans lequel le système (5) d'alerte donne l'alerte (Aj) de processus correspondante à au moins un opérateur (4),
- dans lequel le système (2) de conduite de processus archive au sens d'un historique aux instants d'acquisition respectivement les données (x, x*, Pi) de processus et les alertes (Aj) de processus déclenchées instantanément,
- dans lequel le système (5) d'alerte demande, sur la base de la sélection d'une données (x, x*, Pi) de processus et de la prescription d'un laps de temps de représentation associée, par le au moins un opérateur (4), au système (2) de conduite de processus pour le laps de temps de représentation donné à l'avance, l'historique de la donnée (x, x*, Pi) de processus sélectionnée et donne la courbe dans le temps associée sous la forme d'un graphique (8) à le au moins un opérateur (4),
- dans lequel le graphique (8) comprend un certain nombre de points (9) de données de processus et
- dans lequel le système (5) d'alerte détermine les points (9) de données de processus à l'aide des valeurs de la donnée (x, x*, Pi) de processus sélectionnée d'un laps de temps d'acquisition respectif caractérisant le point (9) de données de processus respectif,
**caractérisé**
- **en ce que** le système (5) d'alerte demande ensemble avec l'historique de la donnée (x, x*, Pi) de processus sélectionné pour le même laps de temps de représentation également l'historique des alertes (Aj) de processus associées à l'objet (3) de processus respectif et
- **en ce que** le système (5) d'alerte représente les points (9) de données de processus dans le graphique (8) suivant un codage, qui indique pour le point (9) de données de processus respectif respectivement la priorité la plus grande avec laquelle des alertes (Aj) de processus sont apparues pendant le laps de temps d'acquisition respectif.

2. Procédé de visualisation suivant la revendication 1,
**caractérisé**
**en ce que** le codage comprend en outre le point de savoir si le laps de temps d'acquisition respectif ne comprend qu'un instant d'acquisition unique ou plusieurs instants d'acquisition.

3. Procédé de visualisation suivant la revendication 1 ou 2,
**caractérisé**
**en ce que** le codage comprend en outre une indication sur la fiabilité du point (9) de données de processus respectif.

4. Procédé de visualisation suivant la revendication 1, 2 ou 3,
**caractérisé**
**en ce que** le système (5) d'alerte détermine, sur la base d'une sélection d'au moins un point (9) de données de processus par le au moins un opérateur (4), automatiquement une indication (10) de suite de message, qui énumère au moins pour le laps de temps d'acquisition, à la base du au moins un point (9) de données de processus sélectionné, les alertes (Aj) de processus ayant la priorité apparaissant la plus grande, et indique le au moins un opérateur (4).

5. Programme d'ordinateur d'un système (5) d'alerte, le programme d'ordinateur comprenant un code (7) de machine, qui peut être élaboré par le système (5) d'alerte, dans lequel le système (5) d'alerte, sur la base de l'élaboration du code (7) de machine,
- reçoit d'un système (2) de conduite de processus commandant et contrôlant une installation (1) technique industrielle des messages (M) d'alerte sur des alertes (Aj) de processus apparaissant et ayant une priorité respective et donne les alertes (Aj) de processus apparaissant à au moins un opérateur,
- sur la base de la sélection d'une donnée (x, x*, Pi) de processus, associée à un objet (3) de processus du système (2) de conduite du processus, et de la prescription d'un laps de temps de représentation associé, demande, par le au moins un opérateur (4), au système (2) de conduite de processus pour le laps de temps de représentation donné à l'avance l'historique de valeurs acquises par le système (2) de conduite de processus aux instants d'acquisition et archivées au sens d'un historique, de la donnée (x, x*, Pi) de processus sélectionnée et donne la courbe dans le temps associée sous la forme d'un graphique (8) comprenant un certain nombre de points (9) de données de processus à le au moins un opérateur (4) et
- détermine les points (9) de données de processus à l'aide des valeurs de la donnée (x, x*, Pi) de processus sélectionnée d'un laps de temps d'acquisition respectif caractérisant le point (9) de donnée de processus respectif,
**caractérisé**
**en ce que** le système (5) d'alerte, sur la base de l'élaboration du code (7) de machine,
- demande ensemble avec l'historique de la donnée (x, x*, Pi) de processus sélectionnée pour le même laps de temps de représentation également l'historique d'alertes (Aj) de processus associées à l'objet (3) de processus respectif et archivées au sens d'un historique par le système (2) de conduite de processus aux instants d'acquisition et
- représente les points (9) de données de processus dans le graphique (8) suivant un codage, qui indique pour le point (9) de donnée de processus respectif respectivement la priorité la plus grande avec laquelle des alertes (Aj) de processus sont apparues pendant le laps de temps de d'acquisition respectif.

6. Programme d'ordinateur suivant la revendication 5,
**caractérisé**
**en ce que** le codage comprend en outre, sur la base de l'élaboration du code (7) de machine, le point de savoir si le laps de temps d'acquisition comprend seulement un instant d'acquisition unique ou plusieurs instants d'acquisition.

7. Programme d'ordinateur suivant la revendication 5 ou 6,
**caractérisé**
**en ce que** le codage comprend, sur la base de l'élaboration du code (7) de machine, en outre une indication sur la fiabilité de l'instant (9) de données de processus respectif.

8. Programme d'ordinateur suivant la revendication 5, 6 ou 7,
**caractérisé**
**en ce que** le système (5) d'alerte détermine, sur la base de l'élaboration du code (7) de machine, sur la base d'une sélection d'au moins un point (9) de données de processus par le au moins un opérateur (4), automatiquement une indication (10) de suite de message, qui énumère, au moins pour le laps de temps d'acquisition à la base du au moins un point (9) de données de processus sélectionné, les alertes (Aj) de processus ayant la priorité apparaissant la plus grande, et indique le au moins un opérateur (4).

9. Système d'alerte, le système d'alerte étant programmé par un programme (6) d'ordinateur suivant l'une des revendications 5 à 8 de manière à ce que, en fonctionnement, le système d'alerte effectue les stades du procédé indiqués dans l'une des revendications 5 à 8.
